# EUROPEAN PATENT APPLICATION

(11) **EP 4 163 008 A1**
(43) Date of publication of application: **12.04.2023**
(21) Application number: 21821109.2
(22) Date of filing: 08.06.2021
(51) Int. Cl.: B01J 20/12, B01J 20/08, B01J 20/28, B01J 20/30, C02F 1/28, C04B 35/195, C04B 38/06

(54) **ADSORPTION MEMBER AND METHOD FOR MANUFACTURING SAME**

(30) Priority: 09.06.2020 JP 2020099798
(71) Applicant: Proterial, Ltd., Tokyo 135-0061 (JP)
(72) Inventor: KASHI Mieko, Tokyo 100-8280 (JP); SAEKI Tomonori, Tokyo 100-8280 (JP); NAKANO Keiko, Tokyo 135-0061 (JP); ISHIZAWA Toshitaka, Tokyo 135-0061 (JP)
(74) Representative: Strehl Schübel-Hopf & Partner
(86) International application number: PCT/JP2021/021818
(87) International publication number: WO 2021/251401

(57) **Abstract**

Provided is an adsorption member excellent in adsorption ability for a foulant having a relatively small molecular weight. The adsorption member includes a plurality of flow channels through which water to be treated passes, and partition walls that partition the flow channels from one another. The partition walls each include a porous ceramic substrate having a communication holes that allow the water to be treated to pass between the adjacent flow channels, and a layer made of particles of a metal oxide fixed to surfaces of the flow channels and surfaces of the communication holes. In the partition walls, a ratio (B/A) of a total pore specific surface area B of pores having a diameter of 6 nm or more and 10 nm or less as measured using a mercury intrusion method to a total pore specific surface area A of pores having a diameter of 1 nm or more and 100 nm or less as measured using a gas adsorption method is 49.3% or more.

## Description

### Technical Field

The present invention relates to an adsorption member for adsorbing and removing a foulant causing deterioration of performance of a separation membrane, and a method of manufacturing the adsorption member.

### Background Art

A solution treatment system is known to remove unnecessary components from a solution to obtain a solution more suitable for some purpose. In a water treatment system for treating water such as seawater desalination, a substance to be separated is removed from raw water (water to be treated) using a separation membrane (a reverse osmosis membrane or the like). At this time, when fouling occurs in the separation membrane, separation performance of removing the substance to be separated from the raw water is reduced.

In order to prolong a replacement life span of the separation membrane, a pretreatment method is known in which a foulant causing deterioration of the performance of the separation membrane is adsorbed in advance by an adsorption member provided at the stage before the separation membrane and is selectively removed from the raw water. For example, in a case where the raw water is water such as seawater, river water, or lake water, main foulants include dissolved organic substances. Among the dissolved organic substances, particularly polysaccharides, which have viscosity, frequently cause fouling of the separation membrane to occur. Therefore, it is required to remove the polysaccharides in advance.

PTL 1 discloses an adsorption member having a porous ceramic honeycomb structure including a plurality of flow channels that are partitioned by porous partition walls and extend in an axial direction, in which water to be treated passes through the plurality of flow channels such that foreign matters in the water to be treated is adsorbed and removed. In the flow channels, an inflow side of the water to be treated and an outflow side of treated water are alternately plugged. The partition walls have communication holes through which the flow channels are connected. The partition walls each include a substrate made of porous ceramic, and metal oxide particles fixed to at least a part of inner surfaces of the communication holes (in the following description, corresponds to communication hole surfaces according to Description of Embodiments) and a surface of the substrate. A total pore volume having a pore diameter of 10 nm to 200 nm as measured by a mercury intrusion method is 0.1% or more per apparent volume of the partition walls.

### Citation List

### Patent Literature

PTL 1: WO2019/027047

### Summary of Invention

### Technical Problem

As a result of studies of the inventors, it has been found that when an adsorption member is used for seawater desalination, mannan derived from a seaweed which is a main foulant has a molecular size of less than 10 nm. Therefore, there is a demand for a technique and an adsorption member that improve an adsorption ability for a foulant as compared with the adsorption member disclosed in PTL 1 and that are suitable for a molecular size of mannan having the above characteristics.

### Solution to Problem

According to an aspect of the invention, there is provided an adsorption member for adsorbing a foulant in water to be treated. The adsorption member includes:
a plurality of flow channels through which water to be treated passes; and
partition walls that partition the flow channels from one another, in which
the partition walls each include
   a porous ceramic substrate having communication holes that allow the water to be treated to pass between the adjacent flow channels, and
   a layer made of particles of a metal oxide (hereinafter, may be referred to as a metal oxide particle layer) fixed to surfaces of the flow channels and surfaces of the communication holes, and
in the partition walls, a ratio (B/A) of a total pore specific surface area B of pores having a diameter of 6 nm or more and 10 nm or less as measured using a mercury intrusion method to a total pore specific surface area A of pores having a diameter of 1 nm or more and 100 nm or less as measured using a gas adsorption method (a BET method) is 49.3% or more.

According to another aspect of the invention, there is provided a method of manufacturing an adsorption member for adsorbing a foulant in water to be treated. The method includes:
a first step of coating a porous ceramic honeycomb structure with a precursor of a metal oxide, the porous ceramic honeycomb structure including a plurality of flow channels that are partitioned by porous ceramic partition walls and extend in an axial direction; and
a second step of drying the porous ceramic honeycomb structure coated with the precursor of the metal oxide and firing the dried porous ceramic honeycomb structure at 900°C or lower, in which
in the first step, the porous ceramic honeycomb structure is coated with the precursor of the metal oxide by suctioning a slurry containing boehmite into the porous ceramic honeycomb structure, and
primary particles of the boehmite have a minor axis diameter of 3 nm or more and 6 nm or less and a major axis diameter of 60 nm or more and 100 nm or less.

Other aspects of the invention will be described later.

### Advantageous Effects of Invention

It is possible to provide an adsorption member excellent in adsorption ability for a foulant having a relatively small molecular weight, and in particular, in a water treatment system for seawater desalination, it is possible to extend the life of a separation membrane, and it is possible to reduce the running cost required for water treatment.

Other problems and novel features will become apparent from the description of this specification and the accompanying drawings.

### Brief Description of Drawings

[FIG. 1] FIG. 1 is a schematic view showing an axial end surface of an adsorption member (a ceramic honeycomb structure).
[FIG. 2] FIG. 2 is a schematic view showing a cross section including a central axis of the adsorption member (the ceramic honeycomb structure).
[FIG. 3] FIG. 3 is a schematic view showing a partition wall cross section.
[FIG. 4] FIG. 4 is an enlarged schematic view showing a partition wall cross section (a surface portion).
[FIG. 5] FIG. 5 is a schematic view showing an adsorption module.

### Description of Embodiments

### (1) Structure of Adsorption Member

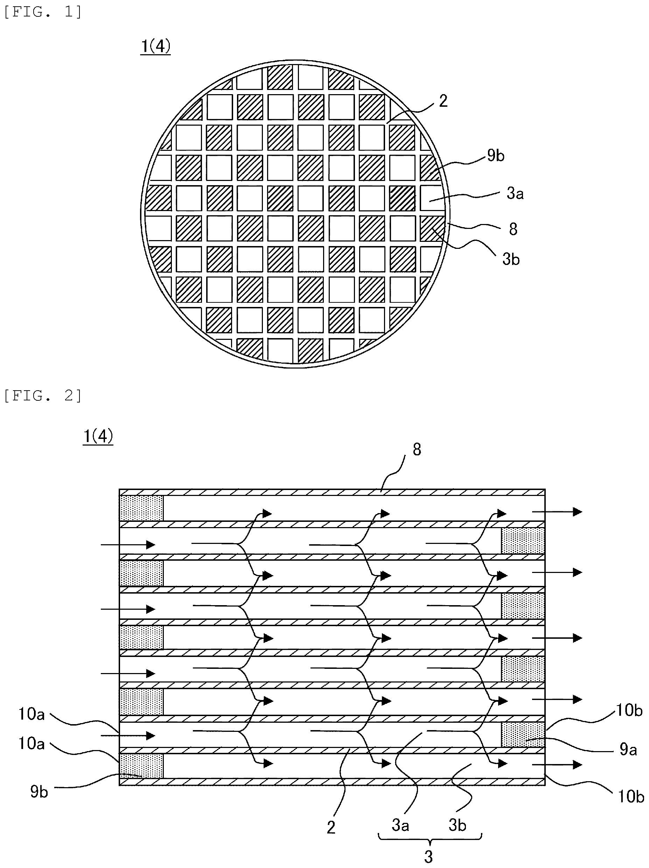

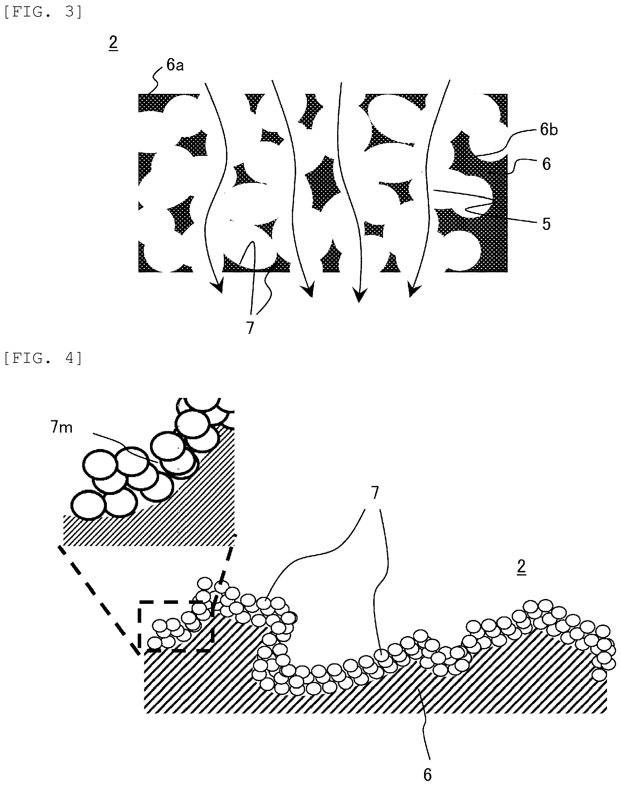

A structure of an adsorption member will be described with reference to FIGS. 1 to 4. An adsorption member 1 has a porous ceramic honeycomb structure 4 in which a plurality of flow channels 3 that are provided inside an outer peripheral wall 8, are partitioned by porous partition walls 2, and extend in an axial direction (a longitudinal direction) are provided, and water to be treated passes through the plurality of flow channels 3 to adsorb and remove foulants such as dissolved organic substances in the water to be treated. As shown in FIG. 3, the partition wall 2 connects the adjacent flow channels 3, and includes a substrate 6 made of porous ceramic having communication holes 5 through which the water to be treated can pass, and metal oxide particles 7 fixed to a flow channel surface 6a and a communication hole surface 6b. The outer peripheral wall 8 does not necessarily have to be provided. In the case where the outer peripheral wall 8 is not provided, it is possible to prevent a risk of contamination of treated water due to the outer peripheral wall 8 being deteriorated and separated from the adsorption member 1 while the outer peripheral wall 8 is used in a water treatment process.

The plurality of flow channels 3 of the porous ceramic honeycomb structure 4 are formed by partition walls formed in a honeycomb shape when viewed in the axial direction. As shown in FIG. 2, the plurality of flow channels 3 are alternately provided with a plugging portion 9b at one end portion (an inflow side of the water to be treated) or a plugging portion 9a at the other end portion (an outflow side of treated water obtained by removing a foulant from the water to be treated) in the porous ceramic honeycomb structure 4. As a result, a first flow channel 3a of which an end surface 10a at the inflow side of the water to be treated is opened and an end surface 10b at the outflow side of the treated water is plugged by the plugging portion 9a, and a second flow channel 3b of which the end surface 10b at the outflow side of the treated water is opened and the end surface 10a at the inflow side of the water to be treated is plugged by the plugging portion 9b are disposed adjacent to each other. As shown in FIG. 1, the first flow channel 3a and the second flow channel 3b are alternately provided in both vertical and horizontal directions as viewed in the axial direction. The adsorption member 1 may not necessarily include the plugging portions 9a or 9b.

A flow of the water to be treated when the water to be treated flows into the porous ceramic honeycomb structure 4 constituting the adsorption member 1 will be described with reference to FIGS. 2 and 3. The water to be treated, which flowed into the first flow channel 3a of which the end surface 10a at the inflow side is opened, flows into the second flow channel 3b through the communication holes 5 in the partition wall 2, and is discharged as treated water from the end surface 10b at the outflow side to the outside of the adsorption member 1. When the water to be treated passes through the first flow channel 3a and the second flow channel 3b and passes through the communication holes 5 in the partition wall 2, a foulant in the water to be treated is adsorbed in gaps between the metal oxide particles 7 fixed to the flow channel surface 6a and the communication hole surface 6b of the partition wall 2, that is, pores 7m (see FIG. 4) formed by layers made of the metal oxide particles 7, thereby removing the foulant from the water to be treated.

As described above, in the partition wall 2, the metal oxide particles 7 are fixed to the flow channel surface 6a and the communication hole surface 6b of the partition wall 2 made of porous ceramic. The metal oxide particles 7 do not need to completely cover the flow channel surface 6a and the communication hole surface 6b of the partition wall 2. However, from the viewpoint of adsorption performance, it is preferable that the metal oxide particles 7 are fixed to the communication hole surface 6b in a manner of covering the communication hole surface 6b as much as possible. This is because, when the water to be treated passes through the adsorption member 1, the water to be treated has a contact time with the metal oxide particles 7 fixed to the communication hole surface 6b longer than a contact time with the metal oxide particles 7 fixed to the flow channel surface 6a of the partition wall 2, so that the metal oxide particles 7 fixed to the communication hole surface 6b can more efficiently adsorb and remove the foulant. As shown in FIG. 4, the metal oxide particles 7 are preferably fixed in a state in which the metal oxide particles 7 are stacked on the flow channel surface 6a and the communication hole surface 6b of the partition wall 2.

As described above, the adsorption member 1 has an internal structure in which the partition wall 2 is provided with the communication holes 5 and the pores 7m formed by the layers made of the metal oxide particles 7. As a result, a pressure loss (resistance) when the water to be treated passes through the partition wall 2 is small because the communication holes 5 are provided, and on the other hand, the pores 7m formed by the layers made of the metal oxide particles 7 makes it possible to efficiently adsorb and remove the foulant in the water to be treated. Hereinafter, the structure of the adsorption member 1 will be individually described.

### (1a) Structure of Partition Wall

As described above, the partition walls 2 are preferably provided in a lattice shape or a mesh shape when viewed in the axial direction. The example shown in FIG. 1 is an example in which the partition walls 2 are provided in a lattice shape, and the flow channel 3 has a quadrangular cross section when viewed in the axial direction. In this case, the cross section of the flow channel 3 is preferably a square having a side of 0.5 mm to 8 mm. The expression of "A to B" refers to "A or more and B or less". When the side is less than 0.5 mm, foreign matters other than the foulant in the water to be treated may block the flow channel 3a of which the end surface 10a at the inflow side is opened, and treatment performance is lowered. On the other hand, when the side is larger than 8 mm, mechanical strength becomes insufficient unless a thickness of the partition wall 2 is sufficient, and the partition wall 2 is likely to be damaged when a large pressure is applied to the water to be treated. A cross sectional shape of the flow channel 3 is not limited to a square as shown in FIG. 1, and may be any shape that can be filled on a plane, such as a quadrangle, a triangle, a hexagon, or a combination of an octagon and a quadrangle.

### (1b) Material of Partition Wall (Substrate)

The substrate 6 of the partition wall 2 is preferably made of ceramic, and a main component of the substrate 6 is preferably alumina, silica, cordierite, titania, mullite, zirconia, spinel, silicon carbide, silicon nitride, aluminum titanate, or lithium aluminum silicate. In particular, the main component is preferably alumina or cordierite, and most preferably cordierite. As long as a main crystal phase is cordierite, the substrate 6 may contain other crystal phases such as spinel, mullite, and sapphirine, and may further contain a glass component.

As will be described later, when alumina is used as a material of the metal oxide particles 7, cordierite is preferably used as a material of the substrate 6. This is because communication holes can be easily formed on a substrate formed of cordierite, and since cordierite contains alumina as a component, cordierite is effective in firmly fixing a layer made of alumina particles (hereinafter, sometimes referred to as an alumina particle layer) to a surface of the substrate 6.

### (1c) Internal Structure of Partition Wall and Characteristics of Foulant

The internal structure of the partition wall 2 includes the communication holes 5 and the pores 7m formed by the metal oxide particles 7 stacked on the communication hole surface 6b. A diameter of the communication holes 5 has a relatively large value distributed in a range of 1 um to 50 um as measured by a mercury intrusion method. On the other hand, a diameter of the pores 7m formed by the metal oxide particles 7 stacked on the communication hole surface 6b has a small value of less than 1 um as measured by a mercury intrusion method.

When the adsorption member 1 is applied to a water treatment system that performs seawater desalination, mannan derived from a seaweed is a representative example of a foulant present in the seawater. As a result of an analysis performed by the present inventors, mannan derived from the seaweed has a small molecular weight of about 50,000 and is considered to be a molecule to which saccharide is bound, and a molecular size of the molecule (assumed to be a sphere having a density of 1 g/cm³) corresponds to a sphere having a diameter of about 5.4 nm.

Here, for adsorbing the mannan having a size corresponding to a sphere with a diameter of about 5.4 nm, a pore having a diameter of 6 nm to 10 nm that is slightly larger than the diameter of mannan is considered to be particularly effective as an adsorption site. Therefore, when the adsorption member 1 has a large number of pores 7m having a diameter of 6 nm to 10 nm, there are a large number of adsorption sites for a foulant having such molecular weights, and the foulant can be efficiently adsorbed and removed. Therefore, the inventor introduces the following index values related to the pores 7m having a diameter of 6 nm to 10 nm on the communication hole surface 6b of the partition wall 2 as indexes that characterize the internal structure of the partition wall 2.

A first index value is a value obtained by measuring a pore having a diameter of 1 nm to 100 nm among the pores 7m, and calculating a specific surface area of all pores having a diameter of 1 nm to 100 nm using a gas adsorption method suitable for the measurement of a pore having such a size. This index value is defined as a "total pore specific surface area A". The reason why the size of a pore to be measured among the pores 7m is set to the pore having a diameter of 1 nm to 100 nm is to evaluate a ratio of pores particularly effective for adsorbing and removing mannan based on a size of a pore (an adsorption site) effective for adsorbing and removing dissolved organic substances such as polysaccharides.

A second index value is a value obtained by measuring a pore having a diameter of 6 nm to 10 nm (that is, a diameter of a pore that is particularly effective as an adsorption site for mannan) among the pores 7m, and calculating a total pore specific surface area using a mercury intrusion method suitable for the measurement of a pore having such a size. This index value is defined as a "total pore specific surface area B".

Here, the total pore specific surface area A of pores having a diameter of 1 nm to 100 nm as the first index value is obtained by performing a measurement using a gas adsorption method in which nitrogen gas is used and a degree of vacuum is 1.33 × 10⁻³ kPa. The total pore specific surface area B of pores having a diameter of 6 nm to 10 nm as the second index value is obtained by performing a measurement using a mercury intrusion method at a maximum pressure of 228 MPa. As will be described in Examples to be described later, according to the above measurement, good results are obtained when a ratio (B/A) of the total pore specific surface area B (the second index value) of pores having a diameter of 6 nm or more and 10 nm or less as measured by the mercury intrusion method to the total pore specific surface area A (the first index value) of pores having a diameter of 1 nm or more and 100 nm or less as measured by the gas adsorption method was 49.3% or more. When the ratio (B/A) does not satisfy the condition of 49.3% or more, pores that are particularly effective as adsorption sites for mannan are present in an insufficient manner, and the effect of adsorbing and removing a foulant is insufficient.

When the layers made of the metal oxide particles 7 are formed to be thick, in other words, when the excess amount of the metal oxide particles 7 are fixed, the communication holes 5 of the partition wall 2 are narrowed and the water to be treated is prevented from passing through the partition wall 2. Further, in the layers made of the metal oxide particles 7, pores formed in a lower layer do not come into contact with the water to be treated, and it is likely that the pores do not function as adsorption sites. As described above, the layers made of the metal oxide particles 7 that are excessively thick may deteriorate adsorption performance of the adsorption member. Therefore, the ratio (B/A) is preferably 70% or less.

Here, an example of a method of measuring each index value will be described.

The mercury intrusion method is a method in which a partition wall sample in a vacuum state is immersed in mercury and pressurized, and a pore distribution is obtained by calculating a relationship between a pressure during pressurization and a volume of mercury pushed into pores of the sample.

Meanwhile, the gas adsorption method is a method in which gas molecules whose adsorption occupation area per molecule is known, such as nitrogen, are adsorbed on a sample surface, a specific surface area of the sample is calculated based on an amount of the gas molecules, or a pore distribution is evaluated based on condensation of the gas molecules. After the sample is cooled, when a gas that is less likely to react with the sample, such as nitrogen, is introduced, gas molecules are adsorbed on the sample surface. When an introduction amount of the gas is increased, the sample surface is covered with the gas molecules, and a transition is performed from monolayer adsorption in which the entire surface is covered with one layer of gas molecules to multilayer adsorption in which gas molecules overlap on gas molecules. Here, the monolayer adsorption amount can be calculated by applying a formula of the gas adsorption method. Further, a sample surface area can be calculated by multiplying the monolayer adsorption amount by an occupation area per molecule of the gas.

In the mercury intrusion method, a pore having a diameter of several nanometers is set as a measurement limit. Therefore, the gas adsorption method is used in a measurement of a total pore specific surface area including pores having a diameter of 1 nm to several nm in a measurement range. Meanwhile, in a measurement of pores having a diameter of 6 nm to 10 nm, the size of the diameter is within the measurement limit, and the total pore specific surface area is measured using the mercury intrusion method in which the pores can be measured with high accuracy.

Since pores having a diameter of 6 nm to 10 nm are effective as adsorption sites for a foulant, the metal oxide particles 7 are preferably particles of alumina, zinc oxide, or the like. In particular, the metal oxide particles 7 are preferably particles of γ-alumina having a large specific surface area and excellent in adsorption performance for a foulant since pores can be easily formed. As will be described in the following Examples, in a case where an abundance ratio (γ/α) of crystals of γ-alumina to α-alumina is measured using a thin-film X-ray diffraction method (hereinafter, sometimes referred to as an X-ray Diffraction (XRD) method), good adsorption characteristics are obtained when the abundance ratio is at least 4.8 or more (including a case where α-alumina is not detected). Similarly, in a case where a diameter of crystallites (hereinafter, sometimes referred to as a crystallite diameter) of the metal oxide particles 7 stacked and fixed on the communication hole surface 6b is measured to be in a range of 5 nm to 7 nm using the XRD method, good adsorption characteristics are obtained.

Here, the crystallite refers to a maximum region in a polycrystal that can be regarded as a single crystal. In general, one particle is a polycrystalline body composed of a plurality of crystallites. When a substance is irradiated with an X-ray, a diffraction phenomenon occurs due to crystals constituting the substance, and an obtained diffraction image is unique because lattice spacings in crystals are unique for each substance. In the XRD method, a substance is identified using this property, and a crystallite diameter is calculated based on a peak width in a diffraction X-ray. The calculated crystallite diameter is not equal to a size of a constituent particle; however, it is an index having a correlation with the size of the particle, with which an accurate measurement can be performed. Therefore, the size of the crystallite diameter is used as an index of the size of the metal oxide particle.

A method of measuring the abundance ratio (γ/α) of crystals of γ-alumina to α-alumina using the XRD method will be described in detail. A diffraction peak was measured by an XRD method using a CuKα ray in a range of an X-ray diffraction angle 2θ of 5° to 100°. The obtained diffraction peak was compared with a powder diffraction file (PDF) (an X-ray diffraction standard database) provided by International Center for Diffraction Data (ICDD), was identified as a γ-alumina crystal according to a diffraction peak from a crystal plane index (400) plane of γ-Al₂O₃, and was identified as an α-alumina crystal according to a diffraction peak from a crystal plane index (012) plane of α-Al₂O₃. For each identified diffraction peak, an integrated intensity (a peak area) of each diffraction peak was calculated by profile fitting, that is, peak separation. The profile fitting was performed in a range of a diffraction angle 2θ of 23.0° to 51.5°. Next, the integrated intensity of the diffraction peak of the α-Al₂O₃ (012) plane and the integrated intensity of the diffraction peak of the γ-Al₂O₃ (400) plane were corrected by a sensitivity coefficient and an index coefficient described in standard data of a standard reference substance (α-Al₂O₃), by using a reference intensity ratio method (RIR method). The abundance ratio (γ/α) of crystals of γ-alumina to α-alumina was calculated based on the corrected integrated intensities. That is, an intensity ratio of the obtained integrated intensity of the diffraction peak of the γ-Al₂O₃ (400) plane to the integrated intensity of the diffraction peak of the α-Al₂O₃ (012) plane was calculated as the abundance ratio with the integrated intensity of the diffraction peak of the γ-Al₂O₃ (400) plane being used as a numerator and the integrated intensity of the diffraction peak of the α-Al₂O₃ (012) plane being used as a denominator.

A method of measuring a crystallite diameter as an index of a size of the metal oxide particle will be described in detail. For example, when calculating a crystallite diameter of γ-alumina, the metal oxide particle was identified as a γ-alumina crystal using the above-described XRD method, and an integral breadth of a diffraction peak of γ-Al₂O₃ was calculated by profile fitting. The integral breadth is an index indicating a peak width (breadth), and is defined as a width of a rectangle when a rectangle having the same area as a peak area and the same height as a peak height is drawn. After the integral breadth was calculated, a diffraction angle and the integral breadth were corrected by an external standard method using a standard sample (NIST-Si). The crystallite diameter of γ-alumina was calculated based on a difference between the corrected integral breadth of the diffraction peak of γ-Al₂O₃ and an integral breadth of a diffraction peak of a crystal plane index (111) plane of a standard sample made of silicon powder by using the Scherrer formula.

Characteristics of the pores 7m formed by the metal oxide particles 7 stacked on the communication hole surface 6b and the measurement method of the size of the pores 7m have been described above in Internal Structure of Partition Wall, the characteristics are the same for pores formed on the flow channel surface 6a of the partition wall 2, and the same measurement method may be applied.

### (1d) Plugging Portion

As described above, the plurality of flow channels 3 of the adsorption member 1 are alternately plugged at the inflow side of the water to be treated or the outflow side of the treated water. The plugging portions 9a and 9b can be made of a material same as that of the substrate 6 of the partition wall 2, or can be made of a material not dissolved in the treated water, such as an organic material or an inorganic material. When the plugging portions 9a and 9b are made of a material same as that of the substrate 6, the plugging portions 9a and 9b can be formed by injecting a slurry made of a ceramic material into a predetermined end portion of a flow channel and firing the slurry. When the plugging portions 9a and 9b are made of an organic material, the plugging portions 9a and 9b may be made of a material such as polyimide, polyamide, polyimide-amide, polyurethane, acrylic, epoxy, polypropylene, or polytetrafluoroethylene. When the plugging portions 9a and 9b are made of an inorganic material, the plugging portions 9a and 9b may be made of ceramic (alumina, silica, magnesia, titania, zirconia, zircon, cordierite, spinel, aluminum titanate, lithium aluminum silicate, or the like) or glass.

### (2) Method of Manufacturing Adsorption Member

Hereinafter, a method of manufacturing the adsorption member 1 will be described. A method of manufacturing an adsorption member according to the invention will be mainly described separately as the formation of a porous ceramic honeycomb structure, the formation of a plugging portion, and the formation of a layer made of metal oxide particles.

### (2a) Method of Forming Porous Ceramic Honeycomb Structure

A method of forming the porous ceramic honeycomb structure 4 shown in FIGS. 1 and 2 will be described by taking a case where cordierite is used as a material of the substrate 6 as an example. In the following description, a subject that performs the method is omitted, and for example, a person or a manufacturing device may be considered as the subject.

(Method 2a1) By preparing a powder containing kaolin, talc, silica, alumina, or the like, a cordierite forming raw material powder is prepared so as to have a mass ratio of SiO₂: 48% to 52%, Al₂O₃: 33% to 37%, and MgO: 12% to 15%.

(Method 2a2) A pore forming material, and a binder such as methyl cellulose and hydroxypropyl methyl cellulose are added to the prepared cordierite forming raw material powder, an additive such as a dispersant, a surfactant, and a lubricant is added as needed, the materials are mixed sufficiently in a dry state, then a specified amount of water is added, and kneading is performed to prepare a plasticized ceramic green body.

(Method 2a3) Next, the green body is extruded and molded using a molding die, cut, dried, and subjected to a processing on an end surface, an outer periphery, and the like as needed to obtain a dried body having a honeycomb structure.

(Method 2a4) The dried body is fired (for example, at 1400°C), then a coating agent containing cordierite particles and colloidal silica is applied to an outer periphery of the dried body, and the dried body is fired to form the cordierite porous ceramic honeycomb structure 4 in which a large number of flow channels 3 that are partitioned by the partition walls 2 and each of which has a quadrangular cross section are formed inside the outer peripheral wall 8. As described above, the outer peripheral wall 8 may not necessarily be provided from the viewpoint of preventing the risk of contamination of the treated water due to the outer peripheral wall 8 being deteriorated and separated from the adsorption member 1 while the outer peripheral wall 8 is used in a water treatment process.

The method of forming the porous ceramic honeycomb structure 4 is described as above. The formation of the outer peripheral wall 8 may be performed after the formation of a plugging portion to be described later.

### (2b) Method of Forming Plugging Portion

A method using a dispenser will be described below.

(Method 2b1) A binder and a dispersion medium (solvent) are added to the cordierite forming raw material powder used in the manufacturing of the porous ceramic honeycomb structure 4 to prepare a slurry for forming a plugging portion.

(Method 2b2) The slurry is injected using a dispenser having a plurality of nozzles such that the end portion 10a at the inflow side of the water to be treated and the end portion 10b at the outflow side of the treated water of the flow channels 3 are alternately plugged, and then the slurry is dried and fired to form the plugging portions 9a and 9b.

The above is an example of the method of forming the plugging portion. The plugging portions 9a and 9b can be formed using a screen printing method in addition to the dispenser. In the case of using the screen printing method, a printing mask having an opening at a predetermined position is provided in accordance with a predetermined position of the porous ceramic honeycomb structure 4, a slurry having high viscosity is injected through the opening of the printing mask, and thereafter, the slurry is dried and fired to form the plugging portions 9a and 9b.

Alternatively, the plugging portions 9a and 9b may be formed by pressing and fixing a plug prepared in advance with a rod or a syringe. When an organic polymer material is used as the plugging portion, a temperature at which the plugging portion 9 is formed is set to be lower than a temperature at which the partition wall 2 is formed.

(2c) Method of Forming Layer Made of Metal Oxide Particles A method of forming a layer made of the metal oxide particles is as follows.

(Method 2c1) First, after the plugging portions 9a and 9b are formed, surfaces of the flow channel surface 6a and the communication hole surface 6b (see FIG. 3) of the partition wall 2 and surfaces of the plugging portions 9a and 9b are coated with a precursor of a metal oxide. The coating of the precursor of the metal oxide can be performed by a known wash coat method.

(Method 2c2) A slurry containing the precursor of the metal oxide (for example, alumina sol such as boehmite), a carboxylic acid (a general formula is R-COOH, in which R represents a monovalent functional group), or an inorganic acid such as nitric acid is supplied into the porous ceramic honeycomb structure 4 by decompression suction or the like, and then the slurry is dried and fired at 900°C or lower. Here, boehmite is aluminum oxyhydroxide (γ-AlOOH), and pseudo-boehmite containing one or more water molecules between boehmite layers may or may not be contained. The reason why the firing temperature is set to 900°C or lower is that, when firing is performed at a temperature higher than 900°C, microcrystals in the alumina sol or γ-alumina formed by phase transition of the alumina sol may grow and become coarse particles, and the specific surface area may be reduced.

Here, regarding the precursor of the metal oxide contained in the slurry used for forming the layer made of metal oxide particles, the particles and a diameter of the particles are defined. When the particles are in a dispersed state in which the particles are dispersed one by one, the particles are referred to as primary particles. A diameter of the primary particles refers to an average particle diameter unless otherwise specified.

The precursor of the metal oxide particles 7 for coating is preferably boehmite in which a minor axis diameter of the primary particles is 3 nm to 6 nm and a major axis diameter is 60 nm to 100 nm. The diameter of the primary particles can be calculated by measuring the major axis diameter and the minor axis diameter of any 10 particles by performing an observation using a transmission electron microscope (TEM). In general, a gap between particles when the particles are closely packed is about 1/10 of the particle diameter. Therefore, in order to effectively form pores that have a diameter of 6 nm to 10 nm and contribute to the adsorption for a foulant, a precursor having a primary particle diameter 10 times as large as the size of the pores is contained in the slurry. For example, ALUMINA SOL AS-520 manufactured by Nissan Chemical Corporation, or Cataloid AS series manufactured by JGC C&C can be used.

As described above, in order to obtain good adsorption performance, it is desirable that the layer made of the metal oxide particles 7 formed after firing is formed in just an appropriate thickness (see FIG. 4). Specifically, the thickness of the layer made of the metal oxide particles 7 after firing is preferably 0.1 um to 2.0 um, and more preferably 0.2 um to 1.0 um. A coating amount of the precursor of the metal oxide is adjusted such that the thickness of the layer made of the metal oxide particles 7 after firing is a suitable thickness. The coating amount can be adjusted according to the viscosity of the slurry, a concentration of the precursor of the metal oxide, and the like. In a case where a predetermined amount of the precursor of the metal oxide is not coated in one treatment, a wash coat method may be repeatedly performed for a plurality of times.

### (3) Adsorption Module

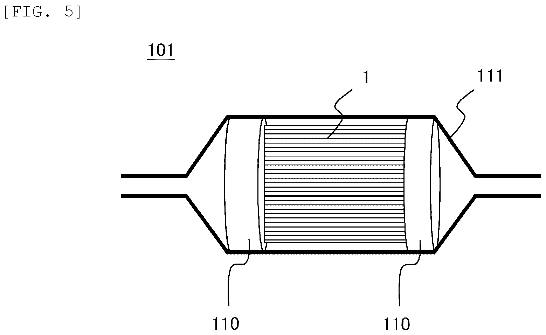

FIG. 5 shows an adsorption module 101 in which the adsorption member 1 is incorporated. The adsorption module 101 includes the adsorption member 1 according to the invention, a filter support 110 that supports the end surface at the inflow side of the water to be treated and the end surface at the outflow side of the treated water of the adsorption member 1 via a gripping member (not shown), and a housing 111 (for example, an acrylic storage container) that houses the adsorption member 1 and the filter support 110. The filter support 110 may be made of a material that allows the water to be treated to pass therethrough without resistance, that has strength to such an extent that the filter support 110 is not likely to be deformed by a pressure of the water to be treated, and that does not have any eluate into the treated water. Examples of the filter support 110 include a resin mesh spacer made of polyethylene, polypropylene, polyethylene terephthalate, and polystyrene, a metal mesh made of stainless steel and titanium, or a perforated metal.

The adsorption member 1 can be used, for example, in a pretreatment step of selectively and efficiently adsorbing and removing an organic substance or the like adhering to a surface of a reverse osmosis membrane. A water treatment facility using the adsorption member 1 is applied to a water treatment process using the reverse osmosis membrane, such as seawater desalination, production of pure water used for manufacturing precision electronic equipment such as a semiconductor, an advanced treatment for clean water, and a regeneration treatment for sewage and wastewater (including a treatment that does not use a microbial treatment in combination).

### [Examples]

Hereinafter, the adsorption member according to the invention will be described in more detail with reference to Examples, each example is merely an aspect of the invention, and the invention is not limited thereto.

### (1) Adsorption Member

Preparation conditions for adsorption members in Examples 1 to 3 and adsorption members in Comparative Examples 1 to 3 and analysis results of the adsorption members will be described. An analysis on an adsorption member and an evaluation on a pore structure to be described later were performed by analyzing and evaluating a sample cut out from the adsorption member after adsorption performance of the adsorption member was evaluated, which was to be described later.

### [Example 1]

### (Method of Forming Porous Ceramic Honeycomb Structure)

A powder containing kaolin, talc, silica, aluminum hydroxide and alumina was prepared to obtain a cordierite forming raw material powder having a chemical composition of 50 mass% of SiO₂, 36 mass% of Al₂O₃, and 14 mass% of MgO. Methyl cellulose and hydroxypropyl methyl cellulose were added as a molding aid to the cordierite forming raw material powder, a thermally expandable microcapsule was added as a pore forming material to the cordierite forming raw material powder, a specified amount of water was injected, and the mixture was sufficiently kneaded to prepare a green body. The obtained green body was extruded using a molding die to prepare a molded body having a honeycomb structure, a peripheral edge portion was removed after drying, and the molded body was fired at 1400°C for 24 hours to obtain a porous ceramic honeycomb structure having an outer diameter of 285 mm, a total length of 330 mm, a partition wall thickness of 0.76 mm, and a cell pitch of 2.66 mm. Here, in order to obtain a size at which adsorption performance of the adsorption member can be evaluated, which was to be described later, samples of the adsorption members to be described in Examples and Comparative Examples were cut out from the porous ceramic honeycomb structure after firing. Each sample of the adsorption member had an outer diameter of 25.4 mm, a total length of 35 mm, a partition wall thickness of 0.76 mm, and a cell pitch of 2.66 mm.

### (Method of Forming Plugging Portion)

A plugging material slurry made of the cordierite forming raw material was filled in the flow channels of the porous ceramic honeycomb structure as a sample so as to alternately plug the end portion of the flow channel at the inflow side of the water to be treated and the end portion of the flow channel at the outflow side of the treated water, and then the plugging material slurry was dried and fired to obtain a sample of an adsorption member having the porous ceramic honeycomb structure in which plugging portions were formed. An outer periphery of the sample was cut out as described above, and an outer peripheral wall was not formed.

### (Method of Forming Layer Made of Metal Oxide Particles)

The porous ceramic honeycomb structure as the sample in which the plugging portions were formed was immersed in a slurry containing alumina sol such as boehmite and an acetic acid. Diameters of primary particles of the alumina sol were measured using a transmission electron microscope (TEM), and as a result, a minor axis diameter was in a range of 3 nm to 6 nm and a major axis diameter was in a range of 60 nm to 100 nm. After the slurry was sufficiently permeated into the inside of the porous ceramic honeycomb structure, the slurry was suctioned and discharged to the outside of the porous ceramic honeycomb structure using a decompression container, dried by performing ventilation for 30 minutes, and fired at 500°C for 6 hours, thereby coating flow channel surfaces and communication hole surfaces of the partition walls of the porous ceramic honeycomb structure and surfaces of the plugging portions with metal oxide particles (alumina particles). A pressure range in the decompression container used at this time was -0.090 MPa to -0.098 MPa, and a volume of the decompression container was 10.8 L (10.8 × 10⁶ mm³), which was about 600 times an apparent volume of the flow channels of the porous ceramic honeycomb structure. In Example 1, in order to grasp a variation of a coating state of the metal oxide particles, three samples of the adsorption member having the porous ceramic honeycomb structure were prepared under the same preparation conditions. In Table 1, the preparation conditions for samples are shown in Examples 1-1 to 1-3. Hereinafter, Examples 1-1 to 1-3 may be collectively referred to as Example 1.

The samples prepared as described above were measured. An alumina particle layer formed by drying and firing a slurry layer containing the coated boehmite was in a range of 0.2 um to 1.0 um in thickness according to a TEM observation. When the alumina particle layer was analyzed using the XRD method, the abundance ratio (γ/α) of crystals of γ-alumina to α-alumina was 4.8 to ∞ (the value was infinite because α-alumina was not detected in Examples 1 and 2), and a crystallite diameter of γ-alumina was 5.2 nm to 6.7 nm. Analysis results for Example 1 (Examples 1-1 to 1-3) are shown in Table 1.

### [Example 2]

Next, a preparation method according to Example 2 will be described as follows. In Example 2 and Example 3 to be described later, samples were prepared in order to simplify a manufacturing method of the adsorption member and reduce the cost, and a layer made of the metal oxide particles to be formed is considered to the same as that in Example 1. Therefore, the alumina particle layer was not analyzed.

In Example 2, in the method of forming the layer made of the metal oxide particles, after the slurry permeated into the inside of the porous ceramic honeycomb structure is suctioned and discharged, a firing treatment is performed without performing the ventilation for drying the slurry in Example 1. The other parts of the preparation method are the same as those in Example 1.

### [Example 3]

In Example 3, in the method of forming the layer made of the metal oxide particles, the volume of the decompression container for discharging the slurry permeated into the inside of the porous ceramic honeycomb structure is set to 0.24 L (0.24 × 10⁶ mm³) and the volume is reduced to 2.2% of the decompression container used in Example 1 and Example 2, in addition to the preparation method in Example 2 in which the ventilation is omitted. The other parts of the preparation method are the same as those in Example 1.

The preparation conditions in Example 2 and Example 3 are shown in Table 1 together with the preparation conditions in Example 1. The preparation methods according to Examples 1 to 3 have been described above. Next, Comparative Examples with respect to Examples 1 to 3 will be described. In Comparative Examples, preparation conditions for the layer made of the metal oxide particles were changed such that a coating state of the metal oxide particles was different from those in Examples 1 to 3.

### [Comparative Example 1]

### (Method of Forming Layer Made of Metal Oxide Particles)

In a step of applying the precursor of the metal oxide, a slurry prepared by adding α-alumina particles having an average primary particle diameter of 0.2 um as measured by a TEM observation to the slurry used in Example 1 so as to have 19.5 mass% of α-alumina particles was used. Other than this, the adsorption member was manufactured under the same preparation conditions as in Example 1. The alumina particle layer formed by drying and firing the slurry layer containing the coated boehmite and α-alumina particles had a thickness in a range of 0.8 um to 5.0 um according to a TEM observation. When the alumina particle layer was analyzed by the XRD method, the abundance ratio (γ/α) of crystals of γ-alumina to α-alumina was 0.02, and a crystallite diameter of γ-alumina was 10.2 nm. The preparation conditions and analysis results for Comparative Example 1 are shown in Table 1.

### [Comparative Example 2]

### (Method of Forming Layer Made of Metal Oxide Particles)

In a step of applying the precursor of the metal oxide, a slurry prepared by adding α-alumina particles having an average primary particle diameter of 1.0 um as measured by a TEM observation to the slurry used in Example 1 so as to have 29.3 mass% of α-alumina particles was used. Other than this, the adsorption member was manufactured under the same preparation conditions as in Example 1. The alumina particle layer formed by drying and firing the slurry layer containing the coated boehmite and α-alumina particles had a thickness in a range of 1.0 um to 5.0 µm according to a TEM observation. When the alumina particle layer was analyzed by the XRD method, the abundance ratio (γ/α) of crystals of γ-alumina to α-alumina was 0.01, and a crystallite diameter of γ-alumina was 15.9 nm. The preparation conditions and analysis results for Comparative Example 2 are shown in Table 1.

### [Comparative Example 3]

### (Method of Forming Layer Made of Metal Oxide Particles)

The step of applying the precursor of the metal oxide was omitted. As a result, an adsorption member having a porous cordierite structure having no layer made of metal oxide particles was manufactured. A TEM observation and an analysis using the XRD method were performed, but alumina particles were not detected. The preparation conditions and analysis results for Comparative Example 3 are shown in Table 1.

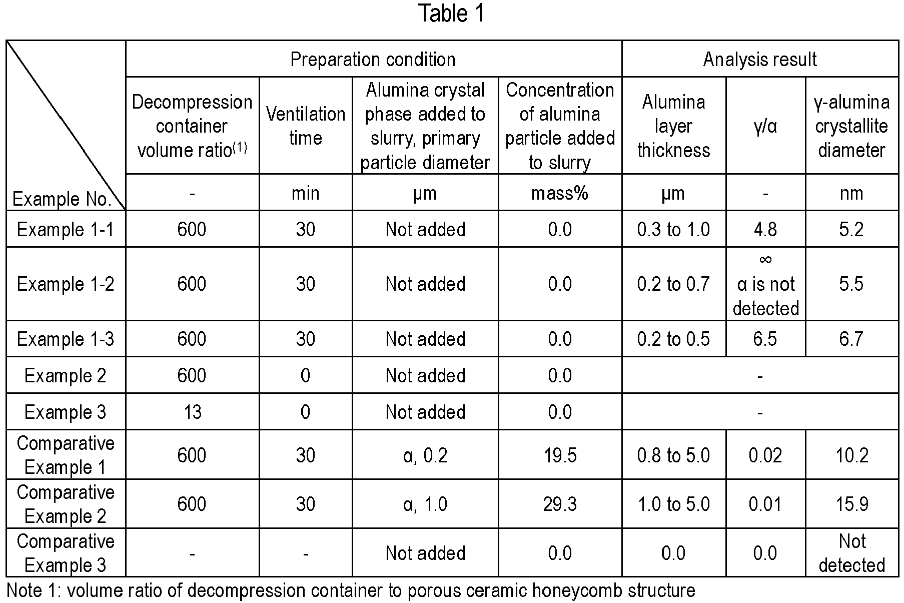

### (2) Evaluation on Pore Structure

Pore structures of the adsorption members in Examples 1 to 3 and Comparative Examples 1 to 3 were evaluated as follows. In order to evaluate the pore structure of the adsorption member, the total pore specific surface area A as a first index was measured using a gas adsorption method. A measurement using the gas adsorption method was performed by storing a test piece cut out from each adsorption member in a measurement cell of TriStar II 3020 manufactured by Micromeritics Instrument Corporation, cooling the test piece, and then introducing nitrogen into the measurement cell. Subsequently, the total pore specific surface area B as a second index was measured using a mercury intrusion method. A test piece cut out from each adsorption member was stored in a measurement cell of AutoPore III manufactured by Micromeritics Instrument Corporation, the measurement cell was decompressed, and then mercury was introduced and pressurized. A pressure for introducing mercury was 3.4 × 10⁻³ MPa. When calculating a diameter of a pore into which mercury was pushed by the pressurized pressure, values of contact angle = 130° and surface tension = 484 × 10⁻³ N/m were used. Evaluation results for the pore structures of the adsorption members in Examples and Comparative Examples are shown in Table 2.

In Table 2, for reference, a specific surface area of pores having a diameter of 1 nm to 5 nm (referred to as a total pore specific surface area C) and a specific surface area of pores having a diameter of 11 nm to 100 nm (referred to as a total pore specific surface area D) are calculated. As described above, pores having a diameter of 1 nm to several nm cannot be measured using the mercury intrusion method because the measurement limit is exceeded. Therefore, the total pore specific surface area C is calculated by subtracting the specific surface area of the pores having a diameter of 6 nm to 100 nm as measured by the mercury intrusion method from the specific surface area of the pores having a diameter of 1 nm to 100 nm as measured by the gas adsorption method. Results are also shown in Table 2. Table 2 also shows a ratio (B/A) of the total pore specific surface area B to the total pore specific surface area A, a ratio (C/A) of the total pore specific surface area C to the total pore specific surface area A, and a ratio (D/A) of the total pore specific surface area D to the total pore specific surface area A.

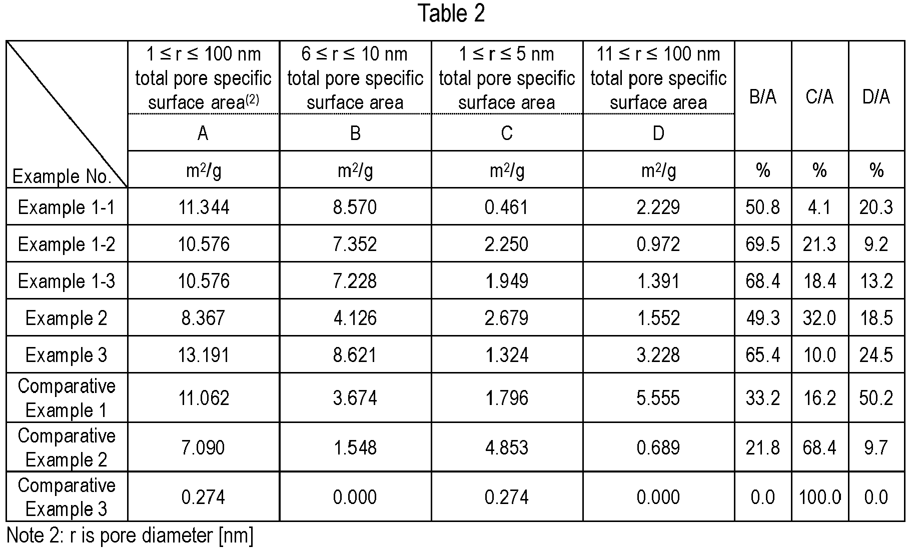

### (3) Adsorption Performance of Adsorption Member

The adsorption performance of the adsorption members in Examples 1 to 3 and Comparative Examples 1 to 3 was evaluated as follows. In order to simulate seawater, a liquid to be treated for evaluating the adsorption performance was prepared by dissolving mannan, a type of polysaccharide, in artificial seawater at a concentration of 6 mg/L. The liquid to be treated was supplied at a volume flow rate (Sv) of 120/h to an adsorption member having a diameter of 25.4 mm and a length of 35 mm incorporated in the adsorption module as shown in FIG. 5. An amount (a carbon weight) of mannan in the liquid to be treated at an inlet and an outlet of the adsorption module was measured by a total organic carbon (TOC) measuring instrument (TOC-L manufactured by Shimadzu Corporation), an amount (a carbon weight) of mannan adsorbed to the adsorption member was calculated, and a cumulative adsorption amount for 90 minutes was evaluated as adsorption performance. Adsorption performance evaluation results for the adsorption members in Examples and Comparative Examples are shown in Table 3. The performance in Examples was 3.690 mg to 4.175 mg, and obvious high adsorption performance was obtained as compared with the performance of 0.000 mg to 2.523 mg in Comparative Examples.

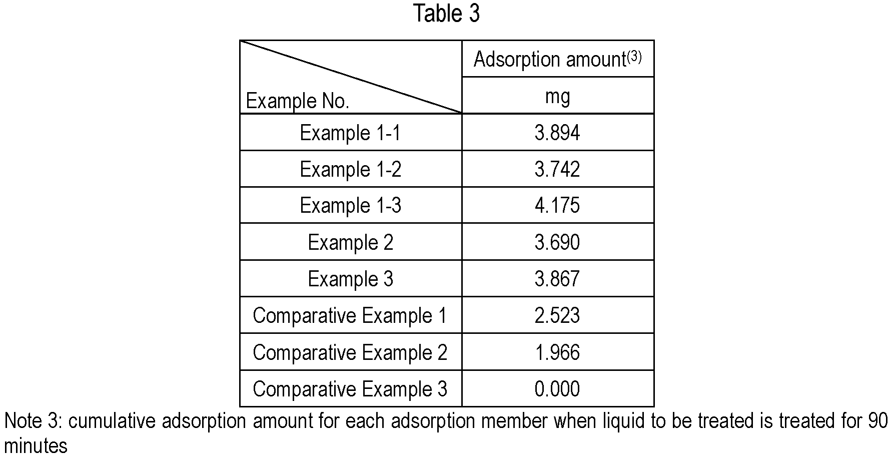

Examples 2 and 3 are examples in which the process cost is reduced as compared with Example 1. In Example 2, it is possible to reduce a power consumption amount at the time of manufacturing the adsorption member and reduce a manufacturing process time by omitting the ventilation drying. In Example 3, the equipment cost is further reduced by compressing a volume of the decompression container. Since the adsorption members in Examples 2 and 3 have the same adsorption performance as the adsorption member in Example 1, from the viewpoint of a manufacturing process, it is desirable to apply manufacturing processes in Examples 2 and 3 in which a more inexpensive manufacturing process is implemented.

Next, a relationship between a microstructure of the alumina particle layer and the adsorption performance will be examined by comparing Table 1 and Table 3. Focusing on the crystallite diameter of γ-alumina, it is found that a magnitude relation of the crystallite diameter of γ-alumina and a magnitude relation of the adsorption amount in Examples 1 and Comparative Examples 1 and 2 are reversed, and the adsorption amount is reduced as the crystallite diameter of γ-alumina increases. In addition, in Comparative Examples, it is found that the crystallite diameter of γ-alumina increases as the diameter of the primary particles of α-alumina added to the slurry increases and as a slurry addition concentration increases.

This shows that the presence of α-alumina acts in a direction of increasing the crystallite diameter of γ-alumina, and acts in a direction of lowering the adsorption performance as the crystallite diameter of γ-alumina increases. As described above, the size of the pores formed by gaps between the particles is about 1/10 of the diameter of the primary particles. Based on this reference, it is considered that the α-alumina having a diameter of primary particles of 0.2 um and 1.0 um in Comparative Examples 1 and 2 is too large, and the α-alumina acts in a direction of reducing the adsorption amount of mannan.

Next, a relationship between the total pore specific surface areas A to D and the adsorption performance will be examined by comparing Table 2 and Table 3. In Examples 1 to 3 in which the adsorption performance is excellent, the ratio (B/A) of the total pore specific surface area B to the total pore specific surface area A is 49.3% or more. In contrast, in Comparative Examples 1 and 2 in which the adsorption performance is poor, (B/A) is respectively 33% and 21%. As described above, it is found that the value of (B/A) greatly affects the adsorption amount. That is, with (B/A) = 49.3% as a boundary, the adsorption performance is maintained high when the ratio is 49.3% or more, and the adsorption performance is lowered as the (B/A) is reduced, that is, when the ratio is 49.3% or less.

In view of the knowledge about the size of mannan derived from the seaweed, it is considered that pores having a diameter of 1 nm to 5 nm do not contribute to adsorption for a foulant. In fact, no strong correlation is found between the ratio (C/A) of the total pore specific surface area C to the total pore specific surface area A and the adsorption amount.

In addition, it is considered that the pores having a diameter of 11 nm to 100 nm have little contribution to the improvement of the absorption performance for a foulant. This is because no correlation is found between the ratio (D/A) of the total pore specific surface area D to the total pore specific surface area A and the adsorption amount.

### Reference Signs List

- 1: adsorption member
- 2: partition wall
- 3: flow channel
- 4: porous ceramic honeycomb structure
- 5: communication hole
- 6: substrate
- 6a: flow channel surface
- 6b: communication hole surface
- 7: metal oxide particle
- 7m: pore formed by layer made of metal oxide particles 7
- 8: outer peripheral wall
- 9: plugging portion
- 10: end portion
- 101: adsorption module
- 110: filter support
- 111: housing

## Claims

1. An adsorption member for adsorbing a foulant in water to be treated, the adsorption member comprising:
a plurality of flow channels through which the water to be treated passes; and
partition walls that partition the flow channels from one another, wherein
the partition walls each include
a porous ceramic substrate in which communication holes through which the water to be treated passes are formed between the adjacent flow channels, and
a layer made of particles of a metal oxide fixed to surfaces of the flow channels and surfaces of the communication holes, and
in the partition walls, a ratio (B/A) of a total pore specific surface area B of pores having a diameter of 6 nm or more and 10 nm or less as measured using a mercury intrusion method to a total pore specific surface area A of pores having a diameter of 1 nm or more and 100 nm or less as measured using a gas adsorption method is 49.3% or more.

2. The adsorption member according to claim 1, wherein
the metal oxide is alumina.

3. The adsorption member according to claim 2, wherein
the metal oxide contains γ-alumina, and a crystallite diameter of the γ-alumina is 5 nm or more and 7 nm or less.

4. The adsorption member according to claim 2, wherein
the metal oxide contains γ-alumina and α-alumina, and an abundance ratio (γ/α) of crystals of the γ-alumina to the α-alumina is 4.8 or more as measured by a thin-film X-ray diffraction method.

5. The adsorption member according to claim 1, wherein
a thickness of the particle layer of the metal oxide is 0.1 um or more and 2.0 um or less.

6. The adsorption member according to claim 1, wherein
the porous ceramic is ceramic containing cordierite as a main crystal phase.

7. A method of manufacturing an adsorption member for adsorbing a foulant in water to be treated, the method comprising:
a first step of coating a porous ceramic honeycomb structure with a precursor of a metal oxide, the porous ceramic honeycomb structure including a plurality of flow channels that are partitioned by porous ceramic partition walls and extend in an axial direction; and
a second step of drying the porous ceramic honeycomb structure coated with the precursor of the metal oxide and firing the dried porous ceramic honeycomb structure at 900°C or lower, wherein
in the first step, the porous ceramic honeycomb structure is coated with the precursor of the metal oxide by suctioning a slurry containing boehmite into the porous ceramic honeycomb structure, and
primary particles of the boehmite have a minor axis diameter of 3 nm or more and 6 nm or less and a major axis diameter of 60 nm or more and 100 nm or less.

8. The method of manufacturing an adsorption member according to claim 7, wherein
a substrate of the porous ceramic honeycomb structure is ceramic containing cordierite as a main crystal phase.

9. The method of manufacturing an adsorption member according to claim 7, wherein
the second step is performed after the first step without performing ventilation for drying the slurry.

10. An adsorption member for adsorbing a foulant in water to be treated, the adsorption member comprising:
a plurality of flow channels through which the water to be treated passes; and
partition walls that partition the adjacent flow channels from one another, wherein
the partition walls each include
a porous ceramic substrate having communication holes that allow the water to be treated to pass between the adjacent flow channels, and
a layer made of particles of a metal oxide fixed to surfaces of the flow channels and surfaces of the communication holes, and
the metal oxide contains γ-alumina, and a crystallite diameter of the γ-alumina is 5 nm or more and 7 nm or less.

11. The adsorption member according to claim 10, wherein
the metal oxide further contains α-alumina, and an abundance ratio (γ/α) of crystals of the γ-alumina to the α-alumina is 4.8 or more as measured by a thin-film X-ray diffraction method.

12. The adsorption member according to claim 10, wherein
in the partition walls, a ratio (B/A) of a total pore specific surface area B of pores having a diameter of 6 nm or more and 10 nm or less as measured using a mercury intrusion method to a total pore specific surface area A of pores having a diameter of 1 nm or more and 100 nm or less measured using a gas adsorption method is 49.3% or more.

13. The adsorption member according to claim 10, wherein
the porous ceramic is ceramic containing cordierite as a main crystal phase.
